Europäisches Patentamt

European Patent Office

Office européen des brevets

(19)

(11) **EP 1 168 170 A1**

(12) **DEMANDE DE BREVET EUROPEEN**

(43) Date de publication:
**02.01.2002 Bulletin 2002/01**

(51) Int Cl.⁷: **G06F 9/46**, G06F 9/44

(21) Numéro de dépôt: **01401495.5**

(22) Date de dépôt: **11.06.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **27.06.2000 FR 0008243**

(71) Demandeur: **ALCATEL**
**75008 Paris (FR)**

(72) Inventeurs:
• **Mlynarczyk, Jérôme**
**92200 Neuilly/Seine (FR)**

• **Chafer, Sylvain**
**75012 Paris (FR)**
• **Hauw, Linda Hélène**
**75015 Paris (FR)**
• **Marzouki, Omar**
**75012 Paris (FR)**

(74) Mandataire: **Sciaux, Edmond**
**COMPAGNIE FINANCIERE ALCATEL Dépt. Propr. Industrielle, 30, avenue Kléber**
**75116 Paris (FR)**

(54) **Procédé de gestion d'informations en java**

(57) Procédé de gestion d'informations dans un contexte de système réparti comprenant au moins un système local et un système distant, et utilisant une méthode d'invocation à distance du langage Java ledit langage comportant des instructions et permettant la création d'objets à partir de classes d'appartenance ayant entre elles des relations hiérarchiques, caractérisé en ce qu'il consiste à définir dans le système local des classes répliquant la hiérarchie de classes du système distant et comportant des moyens d'accès auxdites classes du système distant en vue de permettre d'utiliser au niveau du système local des instructions propres aux classes définies au niveau du système distant.

Fig. 4

EP 1 168 170 A1

## Description

L'invention concerne un procédé de gestion d'informations dans un contexte de système réparti et utilisant une méthode d'invocation à distance du langage Java. Le domaine de l'invention est celui de la programmation dans le cadre d'un système réparti et plus spécifiquement de la programmation orientée objet Java utilisant le mécanisme d'invocation de méthode distante ("RMI" en anglais désignant "Remote Method Invocation").

On rappelle qu'en programmation objet, des classes sont définies, chaque classe ayant ses propres caractéristiques. Ces classes sont reliées entre elles par des relations mère-fille, la classe fille héritant des caractéristiques de la classe mère. On distingue parmi ces caractéristiques les "variables" et les "méthodes". Une classe est en quelque sorte un moule à partir duquel on peut créer autant d'objets que nécessaire.

Si l'on considère par exemple la classe voiture V pour laquelle on déclare des "variables" (couleur, nombre de roues, ...) et des "méthodes" (avancer, arrêter, ...), avant de pouvoir utiliser un objet de cette classe, le programmeur devra l'instancier c'est-à-dire le créer par une instruction "new" :

v = new V(verte, 4,...)

Par cette instruction, le programmeur a créé un objet v aussi appelé instance qui est une voiture verte à 4 roues, .... Il peut alors invoquer les "méthodes" de la classe de cet objet c'est-à-dire les appeler en vue de leur exécution.

Lorsque le programmeur travaille sur un système non réparti, il peut directement instancier des objets comme décrit précédemment et invoquer les "méthodes" de cet objet.

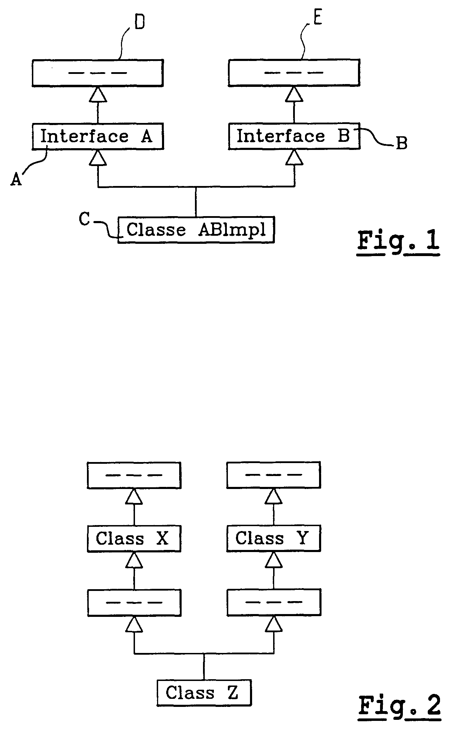

Le langage de programmation orienté objet Java définit également la notion d'interface. Les règles d'héritage pour les interfaces diffèrent de celles des classes, une interface ne définit aucune "variable" non constante et on ne peut instancier une interface comme décrit précédemment. Dans un premier temps, on déclare l'interface et ses "méthodes" mais les "méthodes" sont définies au niveau d'une classe, fille de l'interface. La figure 1 illustre la hiérarchie de cet héritage dans le cas de deux interfaces soeurs A et B dont hérite la classe C « ABImpl » permettant d'implémenter A et B. Les flèches reliant ces classes et interfaces représentent la relation d'héritage.

Les interfaces A et B héritent elles-mêmes d'autres interfaces D et E que l'on ne détaillera pas.

Ainsi si par exemple la "méthode" « afficher » est déclarée pour l'interface A et définie dans la classe C ABImpl, elle pourra être invoquée pour l'objet a de la manière suivante :

A a = new ABImpl () ;
a.afficher() ;

Pour invoquer la "méthode" « imprimer » de l'interface B, le programmeur pourra passer par l'interface A en utilisant l'instruction nommée « horizontal casting » qui consiste à considérer a comme une instance de la classe B, soeur de la classe A :

B b =(B)a ;
b.imprimer() ;

La définition sémantique de l'instruction « horizontal casting » est la suivante illustrée par la figure 2 :

étant donné trois classes X, Y, Z et une instance z de la classe Z,
Z hérite directement ou indirectement de X et de Y,
X n'hérite pas directement ou indirectement de Y,
Y n'hérite pas directement ou indirectement de X.

L' « horizontal casting » est l'opération de « casting » sur z de X dans Y.

Lorsque le système est réparti, les classes et les interfaces sont définies au niveau d'un serveur central aussi appelé système distant et les instances sont enregistrées dans un système de nommage par un service de nommage établissant une correspondance entre un nom logique et une référence d'objet distant. Dans notre exemple, l'objet v, après avoir été instancié au niveau du serveur est enregistré dans le système de nommage par l'instruction :

registry (v, « autoverte ») ;

Le système de nommage est en général hébergé dans une machine indépendante du serveur. Un système réparti comprend un ou plusieurs serveurs, une machine pour le système de nommage et au moins un système local situé sur un site client, généralement distant de celui du serveur, le serveur et le système local incluant une ou plusieurs interfaces à travers lesquelles ils communiquent.

Lorsque le programmeur travaille au niveau d'un site client, il ne peut instancier à ce niveau un objet d'une classe définie au niveau du serveur ; il ne peut utiliser l'instruction new. Il doit récupérer l'objet instancié au niveau du serveur et enregistré dans le système de nommage ; il le récupère auprès du système de nommage à travers sa référence. Dans notre exemple, il récupérera l'objet v à travers sa référence "autoverte" par l'instruction :

V v = NamingService.get("autoverte") ;

Le programmeur pourra ensuite invoquer les "méthodes" caractéristiques de la classe de cet objet.

Ces étapes constituent les principales étapes d'utilisation du système RMI d'invocation de méthode distante par lesquelles un client peut récupérer la référence sur un objet distant à partir d'un système local dans le but de l'utiliser. Le système RMI comprend notamment une interface RMI et une classe d'implémentation de l'interface RMI.

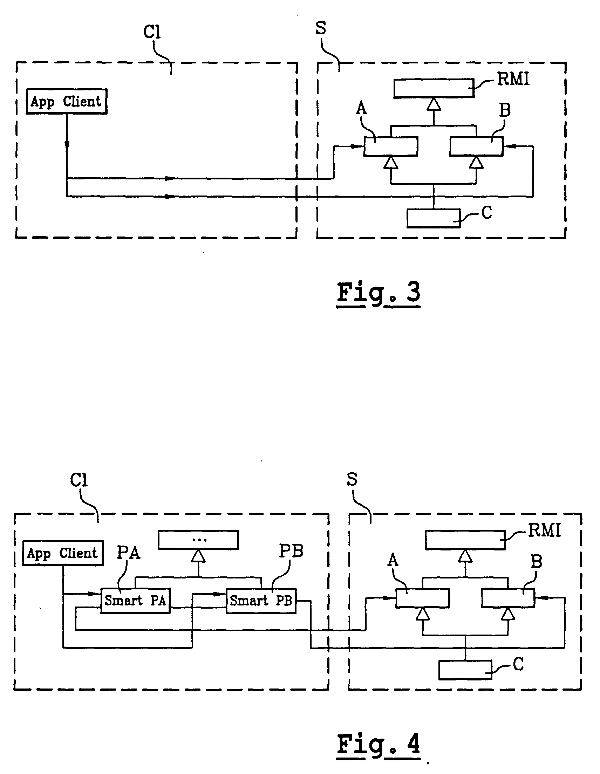

La figure 3 est une représentation schématique d'un système réparti comprenant un serveur S et un système local Cl. Au niveau du serveur S sont définies en particulier les interfaces RMI, A et B et la classe C ABImpl permettant d'instancier les objets de ces interfaces A et B, comme décrit précédemment. Les interfaces A et B héritent elles-mêmes de l'interface RMI afin que les objets instanciés par le serveur S puissent être récupérés par le système Cl. L'application client « AppClient » consiste en un ensemble d'instructions ; les flèches noires entre « AppClient » et les interfaces A et B signifient que les objets de A et B utilisés dans l' « AppClient » sont récupérés au niveau du serveur S où ils sont définis. Les flèches blanches illustrent des relations d'héritage alors que les flèches noires illustrent des relations d'utilisation.

Mais dans le cas des interfaces d'un système réparti, l'instruction d'« horizontal casting » qui porte alors sur un objet distant c'est-à-dire un objet dont les "méthodes" sont invoquées par l'interface RMI, ne peut être utilisée.

Lorsque le site client dispose de plusieurs interfaces d'utilisation d'objet distant, la référence d'objet distant récupéré à travers l'une d'elles ne peut être considéré comme une référence d'objet valide pour les autres interfaces : pour pouvoir utiliser le même objet distant à partir d'une autre interface, il faut réitérer les étapes RMI décrites précédemment ce qui surcharge le serveur et le service de nommage en nécessitant un enregistrement supplémentaire pour chaque interface supportée.

L'objet de l'invention est de faciliter la tâche du programmeur en rendant la répartition du système transparente. Il pourra ainsi, notamment dans le cas d'interfaces, récupérer une référence sur un objet distant comme il le ferait d'un objet local.

L'invention concerne un procédé de gestion d'informations dans un contexte de système réparti comprenant au moins un système local et un système distant, et utilisant une méthode d'invocation à distance du langage Java ledit langage comportant des instructions et permettant la création d'objets à partir de classes d'appartenance ayant entre elles des relations hiérarchiques, principalement caractérisé en ce qu'il consiste à définir dans le système local des classes répliquant la hiérarchie de classes du système distant et comportant des moyens d'accès auxdites classes du système distant en vue de permettre d'utiliser au niveau du système local des instructions propres aux classes définies au niveau du système distant.

Selon une caractéristique de l'invention, une instruction est l'instruction « horizontal casting ».

L'invention concerne également un système réparti de gestion d'informations comprenant au moins un système local Cl et un système distant S comportant plusieurs interfaces A,B et utilisant une méthode d'invocation à distance du langage Java ledit langage comportant des instructions et permettant la création d'objets à partir de classes d'appartenance, caractérisé en ce que le système local Cl comprend un « proxy » PA, PB par interface A,B ledit « proxy » PA ou PB étant défini pour permettre d'utiliser au niveau du système local Cl des instructions propres aux interfaces A,B définies au niveau du système distant S.

D'autres particularités et avantages de l'invention apparaîtront clairement à la lecture de la description faite à titre d'exemple non limitatif et en regard des dessins annexés sur lesquels :

la figure 1 représente une hiérarchie d'héritage entre deux interfaces et une classe pour un système non réparti,
la figure 2 illustre la définition sémantique de l'instruction "horizontal casting",
la figure 3 est une représentation schématique des relations au sein d'un système réparti comprenant un serveur S et un système local Cl selon l'état de la technique,
la figure 4 est une représentation du même système selon l'invention.

L'invention consiste comme représenté figure 4, à interposer entre l'application client « AppClient » et le serveur S, des classes répliquant au niveau du système Cl la même hiérarchie d'héritage qu'elles ont entre elles au niveau du serveur S. La classe passerelle PA ou « SmartProxyA » correspond à l'interface A du serveur S et la classe passerelle PB ou « SmartProxyB » à l'interface B. Ces classes PA et PB héritent elles-mêmes d'autres classes. Les classes PA et PB répliquées côté système Cl sont locales et indépendantes des interfaces distantes auxquelles elles correspondent. Cela permet de profiter de la flexibilité de la programmation à partir de classes locales.

Ces « SmartProxy A et B » PA et PB effectuent par délégation les traitements respectivement de A et B. Elles encapsulent les références sur les objets distants mises à jour dans le système de nommage.

Dans le contexte d'un système réparti, le programmeur concevra alors les applications dans un cadre logiciel comprenant une interface de programmation d'application (désignée en anglais "API" ou "Application Programing Interface") et une chaîne d'outils c'est-à-dire que les applications seront développées selon des règles spécifiques en fonction des étapes.

On rappelle que lors d'une instanciation, les objets sont initialisés avec des valeurs par défaut ; un constructeur est un mécanisme permettant au programmeur de définir d'autres valeurs d'initialisation.

Un constructeur est ainsi défini dans les classes « SmartProxy A et B » PA et PB en vue de récupérer les références des objets distants via le système de nommage. L'instruction new peut alors être utilisée pour instancier des objets des classes PA et PB définies localement au niveau du système CI mais représentant les interfaces A et B par délégation.

Les instructions permettant d'invoquer localement dans « ApplClient » la méthode « afficher » de l'interface A définie au niveau du serveur,

```
A a = NamingService.get(« référenceA ») ;
a.afficher () ;
```

deviennent selon l'invention :

```
PA sPA = new SmartProxyA ;
sPA.afficher () ;
```

Le programmeur pourra ensuite utiliser l' « horizontal casting » entre les classes PA et PB définies localement pour invoquer une méthode de l'interface B définie au niveau du serveur, par exemple la méthode « imprimer » :

```
PB sPB = (PB)sPA ;
SPB.imprimer () ;
```

## Revendications

1. Procédé de gestion d'informations dans un contexte de système réparti comprenant au moins un système local et un système distant, et utilisant une méthode d'invocation à distance du langage Java ledit langage comportant des instructions et permettant la création d'objets à partir de classes d'appartenance ayant entre elles des relations hiérarchiques, **caractérisé en ce qu'**il consiste à définir dans le système local des classes répliquant la hiérarchie de classes du système distant et comportant des moyens d'accès auxdites classes du système distant en vue de permettre d'utiliser au niveau du système local des instructions propres aux classes définies au niveau du système distant.

2. Procédé selon la revendication précédente **caractérisé en ce qu'**une instruction est l'instruction « horizontal casting ».

3. Système réparti de gestion d'informations comprenant au moins un système local (CI) et un système distant (S) comportant plusieurs interfaces (A,B) et utilisant une méthode d'invocation à distance du langage Java ledit langage comportant des instructions et permettant la création d'objets à partir de classes d'appartenance, **caractérisé en ce que** le système local (CI) comprend un « proxy » (PA,PB)

par interface (A,B) ledit « proxy » (PA ou PB) étant défini pour permettre d'utiliser au niveau du système local (CI) des instructions propres aux interfaces (A,B) définies au niveau du système distant (S).

Fig.1

Fig.2

Cl    S

App Client

RMI

A    B

C

**Fig. 3**

Cl    S

App Client    PA    ...    PB

Smart PA    Smart PB

RMI

A    B

C

**Fig. 4**

**Office européen des brevets**

**RAPPORT DE RECHERCHE EUROPEENNE**

Numéro de la demande

EP 01 40 1495

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | GB 2 326 255 A (IBM) 16 décembre 1998 (1998-12-16) * le document en entier * --- | 1-3 | G06F9/46 G06F9/44 |
| P,X | WO 00 77617 A (SUN MICROSYSTEMS. INC.) 21 décembre 2000 (2000-12-21) * abrégé * * page 5, ligne 28 - page 6, ligne 7 * ----- | 1-3 | |

| DOMAINES TECHNIQUES RECHERCHES (Int.Cl.7) |
|---|
| G06F |

Le présent rapport a été établi pour toutes les revendications

| Lieu de la recherche | Date d'achèvement de la recherche | Examinateur |
|---|---|---|
| LA HAYE | 11 octobre 2001 | Fonderson, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

..........................................
& : membre de la même famille, document correspondant

EPO FORM 1503 03.82 (P04C02)

7

**ANNEXE AU RAPPORT DE RECHERCHE EUROPEENNE
RELATIF A LA DEMANDE DE BREVET EUROPEEN NO.**　　　　EP 01 40 1495

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

11-10-2001

| Document brevet cité au rapport de recherche | | Date de publication | Membre(s) de la famille de brevet(s) | | Date de publication |
|---|---|---|---|---|---|
| GB 2326255 | A | 16-12-1998 | US | 6157960 A | 05-12-2000 |
|  |  |  | JP | 11085519 A | 30-03-1999 |
| WO 0077617 | A | 21-12-2000 | AU | 5733500 A | 02-01-2001 |
|  |  |  | WO | 0077617 A2 | 21-12-2000 |

EPO FORM P0460

Pour tout renseignement concernant cette annexe : voir Journal Officiel de l'Office européen des brevets, No. 12/82